# EUROPÄISCHE PATENTSCHRIFT

(11) **EP 3 309 310 B1**
(45) Veröffentlichungstag und Bekanntmachung des Hinweises auf die Patenterteilung: **13.03.2019**
(21) Anmeldenummer: 16193741.2
(22) Anmeldetag: 13.10.2016
(51) Int. Cl.: E03F 5/10

(54) **REGENÜBERLAUFBECKEN ZUM SAMMELN UND SPEICHERN VON WASSER**
RAINWATER OVERFLOW FOR COLLECTING AND STORING WATER
TROP-PLEIN D'EAUX PLUVIALES DESTINÉ À LES COLLECTER ET STOCKER

(43) Veröffentlichungstag der Anmeldung: 18.04.2018
(73) Patentinhaber: Amiantit Germany GmbH, 04720 Mochau (DE)
(72) Erfinder: Napierski, Uwe, 93152 Nittendorf (DE); Staratzke, Heinz Jürgen, 21031 Hamburg (DE); Wendt, Manuela, 17033 Neubrandenburg (DE)
(74) Vertreter: Stippl, Hubert

(56) Entgegenhaltungen:
- EP-A1- 2 508 686
- DE-A1- 10 205 722
- DE-U1- 8 915 629
- US-A1- 2006 273 046

## Beschreibung

Die vorliegende Erfindung betrifft ein Regenüberlaufbecken zum Sammeln und Speichern von Wasser gemäß dem Oberbegriff des Anspruchs 1 sowie ein Verfahren zum Umbau eines Regenüberlaufbeckens.

### Technologischer Hintergrund

Regenüberlaufbecken werden in sogenannten Mischsystemen der Entwässerungstechnik eingesetzt, um z. B. eine Pufferwirkung bei plötzlich auftretenden Niederschlagsereignissen wie Starkregen zu erzielen. Dadurch kann eine Entwässerung großer Flächen z. B. im Einzugsgebiet von Städten oder an Autobahnen erfolgen. Bei Mischsystemen wird insbesondere Schmutz-, Fremd- und Regenwasser gemischt (als sogenanntes Mischwasser) in einer gemeinsamen Leitung abgeleitet.

Gattungsgemäße Regenüberlaufbecken können als Fangbecken, Durchlaufbecken oder Verbundbecken ausgestaltet sein. Fangbecken haben die Aufgabe, den Erstabfluss (Spülstoß) zu speichern und gedrosselt dem Kanalnetz oder einer Abwasserbehandlungsanlage zuzuführen. Durchlaufbecken haben die Aufgabe, Mischwasser zu speichern, gedrosselt dem Kanalnetz oder einer Abwasserbehandlungsanlage zuzuführen und vor der Entlastung über einen Klärüberlauf einer mechanischen Reinigung zu unterziehen, z. B. durch Sedimentation oder Grobstoffrückhaltung. Verbundbecken sind eine Kombination aus Fangbecken und Durchlaufbecken.

Ein Regenüberlaufbecken der gattungsgemäßen Art besitzt in der Regel einen Zulauf und einen Ablauf, jeweils zum Anschluss an ein Kanalnetz, und eine Beckenkammer, die je nach Ausgestaltung und Funktion z. B. eine Speicherkammer oder eine Sedimentationskammer ist. Die Fließrichtung des Wassers erfolgt in der Regel vom Zulauf zum Ablauf. Dem Ablauf ist oftmals ein Drosselbauwerk mit einem Drosselorgan nachgeschaltet, welches zum Drosseln des Wasserflusses dient.

Im Regelfall besitzen Regenüberlaufbauwerke einen Beckenüberlauf, welcher vor der Beckenkammer angeordnet ist und nach der Füllung der Beckenkammer anspringt. Das Wasser des Beckenüberlaufs wird z. B. über einen Auslauf bzw. einen Kanal (Entlastungskanal) z. B. in ein Auslaufbauwerk, eine Vorflut (z. B. Gewässer) oder dergleichen entlastet. Der Beckenüberlauf ist in der Regel als z. B. seitlich angeströmte, feste Schwelle (Streichwehr) mit ein- oder beidseitigem Überlauf ausgebildet. Ferner kann an die Beckenkammer ein zusätzlicher Klärüberlauf angeschlossen sein, über den mechanisch geklärtes Wasser entweder gedrosselt oder ungedrosselt abgeleitet werden kann.

Das Regenüberlaufbecken kann zum Kanalnetz im Hauptschluss, im Nebenschluss oder im unechten Nebenschluss angeordnet sein. Im Hauptschluss sind Beckenkammer und Kanalnetz sowohl bei der Füllung als auch bei der Entleerung hydraulisch gekoppelt, d. h. die Beckenkammer und das Kanalnetz füllen und entleeren sich gleichzeitig. Im Nebenschluss sind Beckenkammer und Kanalnetz durch ein Trennbauwerk hydraulisch entkoppelt, d. h. die Beckenkammer füllt und entleert sich später als das Kanalnetz. Im unechten Nebenschluss ist keine eindeutige Zuordnung zum Haupt- oder Nebenschluss möglich, da bei der Füllung und Entleerung zeitweise ein Hauptschluss und zeitweise ein Nebenschluss vorliegt.

Bei Mischwassereinleitungen muss in der Regel die Einleitung von Grobstoffen oder anderem unansehnlichen Material auf ein annehmbares Maß beschränkt werden (vgl. z. B. DIN EN 752). Hierzu sollten Regenüberlaufbecken mit Rechen-oder Siebanlagen ausgestattet werden, die mechanisch gereinigt werden können oder durch Reinigungsvorrichtungen automatisch gereinigt werden. Hierbei haben sich Rechen und Feinsiebe mit Schlitz- und Lochweiten von 4-8 mm bewährt. Diese werden in der Regel an oder auf der Schwelle angebracht, über die z. B. zum Entlastungskanal, Gewässer oder dergleichen hin entlastet wird. Nach einem starken Entlastungsvorgang ist in der Regel mit dem völligen Zusetzen von nicht maschinell gereinigten Rechen und Sieben zu rechnen, d. h. dass eine manuelle Reinigung der Siebe und Rechen notwendig ist. Ferner können die Rechen und Siebe so betrieben werden, dass sich im Durchflussbereich eine Filterschicht aus den anlagernden Schwimm- und Schwebstoffen aufbaut, die als zusätzlicher Filter wirkt.

Die Nachrüstung bestehender Regenüberlaufbecken mit derartigen Sieben und Rechen ist oftmals problematisch, da sich z. B. die Rückstauhöhe verändern kann oder der Einbau der Reinigungsvorrichtung aufgrund der Maße der Wehrschwelle zum Beckenüberlauf erschwert wird oder gar nicht erfolgen kann.

### Druckschriftlicher Stand der Technik

Ein Regenüberlaufbecken gemäß dem Oberbegriff des Anspruchs 1 ist aus der DE 89 15 629 U1 bekannt. Hierbei sind ein Regenbecken und ein diesem nachgeschaltetes Hilfsbecken durch eine Überfallwand getrennt, die als Überlaufschwelle dient. Als Reinigungsvorrichtungen dienen entweder eine Siebanordnung, die zwischen einer Tauchwand und einer weiteren Wehrschwelle angeordnet ist, oder eine Tauchwand an der Oberkante der Überfallwand zum Auffangen von groben, auf der Wasseroberfläche schwimmenden Gegenständen vor Eintritt derselben in das Hilfsbecken. Des Weiteren ist in der Überfallwand eine Öffnung mit einer Rückschlagklappe zur Gewährleistung eines Rückflusses von dem Hilfsbecken in das Regenbecken vorgesehen.

Aus der EP 2 508 686 A1 ist eine Rückhalteanlage für Niederschlagwasser und Abwasser bekannt, bei der in einem einlaufseitigen Überlaufschacht Rückhalteelemente integriert sind, die sich entlang eines Stauraumkanals in Richtung Auslauf erstrecken.

Die DE 10 2005 019 001 A1 beschreibt eine Siebvorrichtung zur Grobreinigung von Wasser am Überlauf eines Sammelbeckens. Die Siebvorrichtung ist als Siebtrommel ausgestaltet, die an einer Tauchwand rotierbar gelagert ist und sich im Bereich einer Überlaufkante oder Entlastungsschwelle des Sammelbeckens befindet. Die Rotationsachse der Siebtrommel verläuft parallel zur Entlastungsschwelle des Sammelbeckens. Das Wasser durchfließt hierbei die Siebtrommel, wodurch im Wasser befindliche Schmutzstoffe an der Oberfläche der Siebtrommel verbleiben. Die Oberfläche der Siebtrommel kann durch die Rotation der Siebtrommel gegen eine an der Entlastungsschwelle angebrachte Abstreifeinrichtung, z. B. einer Bürste, einem Kamm oder dergleichen, gereinigt werden. Der Rotationsantrieb der Siebtrommel erfolgt mittels Fremdenergie, z. B. durch einen motorischen Drehantrieb. Die Siebvorrichtung besitzt einen komplizierten und störungsanfälligen Aufbau, insbesondere bedingt durch die Rotationsfähigkeit, den motorischen Antrieb und die komplizierte Ausgestaltung der Konstruktion, wie z. B. die Anordnung der Tauchwand. Die Länge der Siebtrommel bzw. die vom Wasser durchströmte Oberfläche der Siebtrommel wird hierbei aufgrund der parallelen Anordnung zur Entlastungsschwelle durch die Länge der Entlastungsschwelle beschränkt, d. h. die Länge der Entlastungsschwelle wirkt sich auf die Reinigungswirkung aus. Dadurch können sich gerade bei länglichen Sammelbecken und kurzen Entlastungsschwellen Probleme hinsichtlich einer effektiven Reinigungswirkung ergeben. Darüber hinaus bedingt die Rotationsfunktion der Siebtrommel einen erhöhten Wartungs- und Reinigungsaufwand, um die rotierende Bewegung auch bei langer Betriebsdauer zu gewährleisten, z. B. durch vermehrtes Ölen oder Nachfetten im Drehbereich. Zudem verursacht ein motorischer Antrieb zusätzliche Kosten und Wartungsarbeiten. Ferner muss die Abstreifeinrichtung regelmäßig gereinigt und/oder gewechselt werden. Darüber hinaus wird die Bildung einer reinigenden Filterschicht durch den fortwährenden Abstreifvorgang verhindert.

### Aufgabe der vorliegenden Erfindung

Die Aufgabe der vorliegenden Erfindung besteht darin, ein Regenüberlaufbecken der gattungsgemäßen Art mit einer verbesserten Schmutzstoffrückhaltung zur Verfügung zu stellen, bei welchem die Reinigungswirkung verbessert und der Wartungsaufwand verringert wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß ist zwischen Beckenkammer und Beckenüberlauf eine Rückhaltewand vorgesehen, die dazu dient, in der Beckenkammer anfallendes Wasser aufzustauen. Zudem ist in der Rückhaltewand eine Durchgangsöffnung und zwischen der Rückhaltewand und der Wehrschwelle ein Stauraum vorgesehen. Im Stauraum staut sich das von der Beckenkammer durch die Durchgangsöffnung abfließende Wasser, um anschließend über die Wehrschwelle in den Beckenüberlauf zu gelangen. Ferner ist als Reinigungsvorrichtung mindestens ein zumindest bereichsweise wasserdurchlässiges, vorzugsweise langgestrecktes, bewegungsfestes Rückhalteelement vorgesehen, welches sich in die Beckenkammer hinein erstreckt, sodass das aus der Beckenkammer durch die Durchgangsöffnung in den Stauraum abfließende Wasser durch das Rückhalteelement hindurchströmt und hierbei von Grobstoffen gereinigt wird. Daraus resultiert der Vorteil, dass die Länge des Rückhalteelements bzw. die vom Wasser durchströmte Oberfläche des Rückhalteelements nicht durch die Länge der Rückhaltewand und/oder der Wehrschwelle begrenzt wird. Die Länge der Rückhaltewand wirkt sich daher nicht auf die Reinigungswirkung des Rückhalteelements aus. Dadurch, dass das Rückhalteelement bewegungsfest, d. h. nicht motorisch oder hydraulisch rotierbar, ausgestaltet ist, verringert sich der Wartungsaufwand erheblich, da keine rotierenden oder antreibenden Bestandteile gewartet werden müssen. Zudem ist die Nachrüstung der erfindungsgemäßen Reinigungsvorrichtung in einem gattungsgemäßen Regenüberlaufbecken kostengünstig und in einfacher Weise realisierbar. Aufgrund der Orientierung des Rückhalteelements in die Beckenkammer hinein, ändert sich die Rückstauhöhe bei einer Nachrüstung nicht, d. h. der maximale Wasserspiegel bleibt im Wesentlichen gleich. Dadurch ist es in der Regel bei einer Nachrüstung bzw. einem Umbau eines bestehenden Regenüberlaufbeckens nicht notwendig, die Stauhöhe neu zu berechnen und diese genehmigen zu lassen. Zudem ist ein Gefälle im Bereich des Stauraums vorgesehen, welches von der Wehrschwelle hin zur Durchgangsöffnung der Rückhaltewand abfällt. Dadurch können Verschmutzungen im Bereich des Stauraums wirksam vermieden werden, indem bei sinkendem Wasserspiegel im Regenüberlaufbecken stets ein Rückfluss des Wassers vom Stauraum hin zur Beckenkammer stattfindet. Auf diese Weise werden Sedimentationsvorgänge und damit einhergehende Verschmutzungen im Bereich des Stauraums verhindert. Das Gefälle kann aus einer Schüttung, Einlage, Gussmasse oder dergleichen bestehen oder integraler Bestandteil des Stauraumbodens bzw. des zweiten zum Beckenüberlauf hin orientierten Wandabschnitts sein.

Vorzugsweise ist ein Durchlass, wie z. B. eine Ausnehmung, ein Durchbruch, oder eine Rohröffnung, in der Rückhaltewand vorgesehen, sodass Wasser vom Zulauf durch den Durchlass in die Beckenkammer strömen kann. Dies kann bei bestehenden Regenüberlaufbecken durch eine einfache Umbaumaßnahme erreicht werden, beispielsweise durch Entfernung eines Teils einer Schwelle.

Zweckmäßigerweise weist die Rückhaltewand einen nach oben verlaufenden, ersten Wandabschnitt sowie einen zweiten Wandabschnitt auf, der zum Beckenüberlauf hin orientiert ist.

In bevorzugter Weise befindet sich die Durchgangsöffnung der Rückhaltewand am ersten Wandabschnitt. Das Rückhalteelement erstreckt sich hierbei von der Durchgangsöffnung in die Beckenkammer und kann in praktischer Weise im Bereich der Rückhaltewand bzw. am nach oben verlaufenden, ersten Wandabschnitt angebracht werden.

Alternativ oder zusätzlich kann auch an der Durchgangsöffnung ein sich in die Beckenkammer hinein erstreckendes Zulaufelement, z. B. ein Verlängerungsrohr, vorgesehen sein. Zudem kann ein Rückhalteelement, vorzugsweise eine Mehrzahl von parallel angeordneten Rückhalteelementen, in das Zulaufelement münden, die sich im Wesentlichen senkrecht zum Zulaufelement in die Beckenkammer hinein erstrecken. Dadurch kann die Raumaufteilung der Beckenkammer für die Installation von Rückhalteelementen zusätzlich optimiert werden.

In vorteilhafter Weise kann als Rückhalteelement ein rohrförmiges, vorzugsweise zylinderförmiges, Element vorgesehen sein. Ferner kann das rohrförmige Rückhalteelement hierbei z. B. einen runden oder eckigen Querschnitt aufweisen. Durch die unterschiedliche Ausgestaltung des Querschnitts kann das Rückhalteelement individuell an die Einbausituation im jeweiligen Regenüberlaufbecken angepasst werden. Ferner kann das Rückhalteelement aus korrosionsbeständigem Material gefertigt sein. Daraus resultiert der Vorteil, dass das Rückhalteelement äußerst robust ist und eine lange Haltbarkeit besitzt.

Zweckmäßigerweise kann das Rückhalteelement derart ausgestaltet werden, dass wasserundurchlässige Bereiche vorgesehen sind, die z. B. der Stabilitätsverbesserung oder der Anbringung von Befestigungen dienen. Die wasserdurchlässigen Bereiche können gemäß einer bevorzugten Ausgestaltung des Rückhalteelements eine runde, eckige und/oder geschlitzte Perforation aufweisen, sodass eine Gitter-, Sieb- und/oder Netzstruktur entsteht. Die Perforation liegt bevorzugt im Bereich von 4-10 mm x 4-10 mm. Beispielsweise können durch ein Gitter von 8 mm x 8 mm 100 % aller Schmutzstoffe mit einer Korngröße von > 8 mm, 50 % aller Schmutzstoffe mit einer Korngröße von 4 mm und 25 % aller Schmutzstoffe mit einer Korngröße von 2 mm zurückgehalten werden. Überraschenderweise hat sich gezeigt, dass sich bei einer derartigen Ausgestaltung der Rückhalteelemente in Kombination mit der erfindungsgemäßen Anordnung der Rückhalteelemente eine Filterschicht aus Schwimm- und Schwebstoffen im Bereich der Rückhalteelemente bildet, die im Vergleich zu bisher bekannten Filterschichten über einen sehr langen Zeitraum wasserdurchlässig bleibt. Die Betriebsdauer und die Reinigungsfunktion können dadurch in erheblichem Maße verbessert werden.

Vorzugsweise ist ein Notüberlauf zwischen Beckenkammer und Stauraum bzw. Beckenüberlauf vorgesehen. Dadurch wird gewährleistet, dass im Falle einer Überlastung des Abflusses durch die Rückhalteelemente, z. B. bei sehr starken Niederschlägen oder verstopften Rückhalteelementen, z. B. ein Durchfluss in der Rückhaltewand oberhalb der Durchgangsöffnung genutzt werden kann, um Beschädigungen oder einen Rückstau zum Zufluss hin zu vermeiden. Die Sicherheit und die Funktion des Regenüberlaufbeckens werden durch einen derartigen Notüberlauf erheblich verbessert. Zudem können optional auch Notüberläufe an der Beckenkammer, dem Beckenüberlauf oder im Bereich zwischen Zulauf und Beckenüberlauf vorgesehen sein.

Zweckmäßigerweise kann eine Sensoreinrichtung vorgesehen sein, um den Verschmutzungsgrad der Rückhalteelemente zu ermitteln. Dadurch können die Reinigungsintervalle individuell an den Verschmutzungsgrad angepasst werden, wodurch Zeit und Kosten gespart werden können. Beispielsweise können eine oder mehrere Druckmessdose(n) und/oder Wasserstandsensor(en) im Bereich der Beckenkammer und im Bereich des Stauraums vorgesehen sein. Der Druck- bzw. Wasserstandunterschied kann hierbei herangezogen werden, um auf eine Verschmutzung der Rückhalteelemente zu schließen, indem z. B. ein ausreichend großer Messwertunterschied der Sensoren in Beckenkammer und Stauraum eine Durchflussverminderung im Bereich der Rückhalteelemente oder der Durchgangsöffnung signalisiert. Im Falle eines Umbaus oder einer Nachrüstung eines bestehenden Regenüberlaufbeckens können auch schon vorhandene Sensoren für eine derartige Verschmutzungsgradbestimmung umfunktioniert werden.

Ferner kann am Regenüberlaufbecken ein Klärüberlauf vorgesehen sein, wobei das Wasser von der Beckenkammer zum Klärüberlauf durch eine Öffnung im Bereich der Wandung des Klärüberlaufs strömt. Hierbei ist ein Rückhalteelement innerhalb der Beckenkammer vorgesehen, welches sich in die Beckenkammer hinein erstreckt, wobei das von der Beckenkammer durch die Öffnung in den Klärüberlauf abfließende Wasser durch das Rückhalteelement hindurchströmt und dabei gereinigt wird.

Zweckmäßigerweise kann eine Zulaufvorrichtung im Bereich der Öffnung bzw. des Zulaufs von der Beckenkammer in den Klärüberlauf vorgesehen sein. Die Zulaufvorrichtung weist hierbei einen Eingang und Ausgang auf, wobei die Strömungsrichtung des Wassers vom Eingang zum Ausgang verläuft und die Zulaufvorrichtung einen, im Wesentlichen nach oben gerichteten, abgewinkelten Abschnitt aufweist. Der Ausgang befindet sich unterhalb der Wasserspiegellage des Beckenüberlaufs am abgewinkelten Abschnitt.

Vorzugsweise können entlang des Stauraums bzw. der Rückhaltewand, des Zulaufelements und/oder des Klärüberlaufs mehrere, vorzugsweise parallel zueinander angeordnete, Rückhalteelemente vorgesehen sein. Daraus resultiert der Vorteil, dass die vom Wasser durchströmte Gesamtoberfläche und somit die Reinigungswirkung erhöht werden kann, indem ein großer Teil der Beckenkammer für die Installation von Rückhalteelementen genutzt werden kann. Dadurch wird eine möglichst große die Reinigungswirkung herbeiführende Oberfläche geschaffen, sodass auf eine kontinuierlich begleitende Reinigungsvorrichtung, wie z. B. eine Abstreifeinrichtung, verzichtet werden kann.

Zweckmäßigerweise kann der Ausgang der Zulaufvorrichtung mehrere Öffnungen umfassen, z. B. kann es sich bei der Zulaufvorrichtung um einen Rohrkrümmer mit aufgesetzten Klärschlitzen handeln. Die Klärschlitze können dabei durch Stege des Rohrkrümmers gebildet werden.

Alternativ oder zusätzlich kann eine als Stauraum dienende Zulaufvorrichtung zwischen der Beckenkammer und dem Beckenüberlauf vorgesehen sein. Dadurch kann das gereinigte Wasser, welches von der Beckenkammer durch die Rückhalteelemente hin zum Beckenüberlauf gelangt, direkt in den Beckenüberlauf geleitet werden. Dies kann vor allem beim Anfall von geringen Wassermengen von Vorteil sein. Vorzugsweise ist als Zulaufvorrichtung zwischen der Beckenkammer und dem Beckenüberlauf ein Zulaufrohr vorgesehen.

Neben- oder untergeordnet beansprucht die vorliegende Erfindung ein Verfahren zum Umbau eines Regenüberlaufbeckens, welches folgende Arbeitsschritte umfasst:
Das Erstellen eines Durchlasses zwischen Zulauf und Beckenkammer durch das zumindest teilweise Öffnen einer Trennvorrichtung, wie z. B. die Schwelle zwischen Trennbauwerk und Beckenkammer, oder durch das Einbringen einer Verbindungsvorrichtung zwischen Zulauf und Beckenkammer, wie z. B. einem abgezweigten Rohr bzw. einem T-Stück, welches Zulauf, Beckenkammer und Ablauf verbindet.
Das Festlegen bzw. Erstellen einer Rückhaltewand, die sich bis an die Decke des Regenüberlaufbeckens oder bis zu einem an die Decke des Regenüberlaufbeckens angrenzenden Notüberlauf zwischen Beckenkammer und Beckenüberlauf erstreckt und einen Stauraum bildet, welcher der Beckenkammer nachgeschaltet und dem Beckenüberlauf vorgeschaltet ist.
Das Erzeugen mindestens einer Durchgangsöffnung im Bereich der Rückhaltewand, die als Durchlassöffnung für Wasser von der Beckenkammer zum Stauraum dient.
Das Erstellen eines Gefälles innerhalb des Stauraums, welches von der Wehrschwelle hin zur Durchgangsöffnung der Wand abfällt.
Das Installieren mindestens eines Rückhalteelements, welches sich von einer Durchgangsöffnung in die Beckenkammer hinein erstreckt, oder das Installieren eines Zulaufelements, welches sich in die Beckenkammer hinein erstreckt, wobei sich von dem Zulaufelement mindestens ein vorzugsweise eine Mehrzahl von Rückhalteelementen in die Beckenkammer hinein erstreckt bzw. erstrecken.
Das Verfahren umfasst ferner den Arbeitsschritt Erstellen eines Gefälles innerhalb des Stauraums. Das Gefälle fällt von der Wehrschwelle hin zur Durchgangsöffnung der Rückhaltewand ab und verhindert somit eine sedimentationsbedingte Verschmutzung im Bereich des Stauraums.

Vorzugsweise umfasst das Verfahren den Arbeitsschritt Erstellen eines Notüberlaufs. Hierbei kann es sich bevorzugt um die Installation eines Notüberlaufs zwischen Beckenkammer und Stauraum oder an einen anderem aus dem Stand der Technik bekannten Installationsort im Bereich der Beckenkammer, des Klärüberlaufs und/oder des Beckenüberlaufs handeln.

Ferner kann das Verfahren den Arbeitsschritt Erstellen eines Klärüberlaufs umfassen. In bevorzugter Weise handelt es sich bei dem Klärüberlauf um einen erfindungsgemäßen Klärüberlauf mit Zulaufvorrichtung.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Schnittdarstellung eines Regenüberlaufbeckens mit Trennbauwerk gemäß dem Stand der Technik;
- Fig. 2: eine vereinfachte Schnittdarstellung einer ersten Ausgestaltung des erfindungsgemäßen Regenüberlaufbeckens mit Notüberlauf;
- Fig. 3a: eine vereinfachte Schnittdarstellung des Regenüberlaufbeckens aus Fig. 1 nach erfolgtem ersten Umbauschritt;
- Fig. 3b: eine vereinfachte Schnittdarstellung des Regenüberlaufbeckens aus Fig. 3a nach erfolgten weiteren Umbaumaßnahmen;
- Fig. 3c: eine vereinfachte Schnittdarstellung des Regenüberlaufbeckens aus Fig. 3b nach erfolgten weiteren Umbaumaßnahmen;
- Fig. 3d: eine vereinfachte Schnittdarstellung des Regenüberlaufbeckens aus Fig. 3c nach erfolgten weiteren Umbaumaßnahmen;
- Fig. 3e: eine vereinfachte Schnittdarstellung des Regenüberlaufbeckens aus Fig. 3d nach erfolgten weiteren Umbaumaßnahmen;
- Fig. 3f: eine vereinfachte Schnittdarstellung einer zweiten Ausgestaltung des erfindungsgemäßen Regenüberlaufbeckens;
- Fig. 4: eine vereinfachte Schnittdarstellung eines Regenüberlaufbeckens ohne Trennbauwerk gemäß dem Stand der Technik;
- Fig. 5a: eine vereinfachte Schnittdarstellung des Regenüberlaufbeckens aus Fig. 4 nach erfolgtem ersten Umbauschritt
- Fig. 5b: eine vereinfachte Schnittdarstellung des Regenüberlaufbeckens aus Fig. 6a nach erfolgten weiteren Umbaumaßnahmen;
- Fig. 5c: eine vereinfachte Schnittdarstellung des Regenüberlaufbeckens aus Fig. 6b nach erfolgten weiteren Umbaumaßnahmen;
- Fig. 5d: eine vereinfachte Schnittdarstellung einer dritten Ausgestaltung des erfindungsgemäßen Regenüberlaufbeckens;
- Fig. 6: eine vereinfachte perspektivische Draufsicht des Regenüberlaufbeckens aus Fig. 3f;
- Fig. 7: eine vereinfachte perspektivische Draufsicht einer vierten Ausgestaltung des erfindungsgemäßen Regenüberlaufbeckens;
- Fig. 8: eine vereinfachte Schnittdarstellung des Regenüberlaufbeckens aus Fig. 2 mit einem erfindungsgemäßen Klärüberlauf;
- Fig. 9a: eine vereinfachte Schnittdarstellung eines Klärüberlaufs gemäß dem Stand der Technik, sowie
- Fig. 9b: eine vereinfachte Schnittdarstellung eines erfindungsgemäßen Klärüberlaufs.

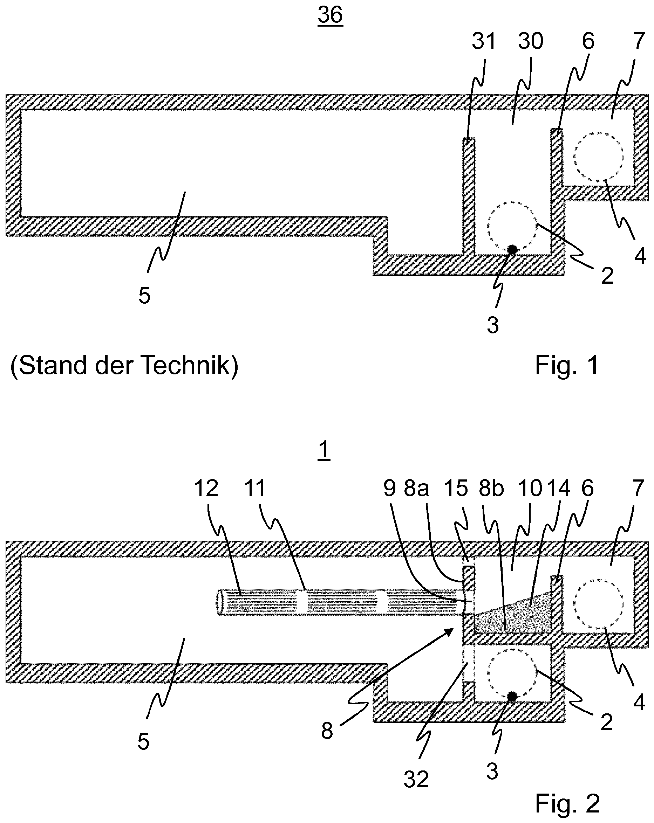

Bezugsziffer 36 in Fig. 1 bezeichnet ein Regenüberlaufbecken gemäß dem Stand der Technik. Das Regenüberlaufbecken 36 besitzt einen Zulauf 2, einen Ablauf 3, einen Auslauf 4 sowie eine Beckenkammer 5. Die Strömungsrichtung des Wassers erfolgt in der Regel vom Zulauf 2 hin zum Ablauf 3. Der Zulauf 2 sowie der Ablauf 3 sind hierbei am Trennbauwerk 30 angeordnet. Ferner ist das Trennbauwerk 30 über eine Schwelle 31 von der Beckenkammer 5 getrennt und über eine Wehrschwelle 6 von einem Beckenüberlauf 7 getrennt. Dadurch wird das Wasser im Trennbauwerk 30 entlang der Schwelle 31 und der Wehrschwelle 6 vom Zulauf 2 zum Ablauf 3 hin geleitet. Zweckmäßigerweise kann dem Ablauf 3 eine, in Fig. 1 nicht dargestellte, Drosseleinrichtung, z. B. ein Drosselbauwerk mit Drosselorgan oder eine Drosselleitung, nachgeschaltet sein. Ferner ist dem Beckenüberlauf 7 der Auslauf 4 nachgeschaltet, der dazu dient das Wasser des Beckenüberlaufs 7 abzuleiten.

Die Beckenkammer 5 und der Beckenüberlauf 7 sind durch das Trennbauwerk 30 hydraulisch entkoppelt, d. h. die Beckenkammer 5 ist im Nebenschluss angeordnet. Wenn der Wasserspiegel im Trennbauwerk 30 bis über die Höhe der Schwelle 31 steigt, z. B. infolge eines Starkregenereignisses, strömt das Wasser vom Trennbauwerk 30 über die Schwelle 31 in die Beckenkammer 5. Die Beckenkammer 5 wird dadurch mit Wasser gefüllt. Steigt der Wasserspiegel im Verlauf des Regenereignisses nach dem Befüllen der Beckenkammer 5 weiter bis auf die Oberkante der Wehrschwelle 6 an, strömt das Wasser über die Wehrschwelle 6 in den Beckenüberlauf 7. Das Wasser des Beckenüberlaufs 7 kann über den Auslauf 4 entlastet werden, z. B. in einen nachgeschalteten Entlastungskanal, ein Gewässer (Vorflut) oder dergleichen. Über eine in den Zeichnungsfiguren nicht dargestellte Pumpe kann das Wasser aus der Beckenkammer 5 wieder abgepumpt und dem Kanalnetz zugeführt werden.

Nach jedem erfolgten Regenereignis können sich Verschmutzungen im Bereich des Trennbauwerks 30, der Beckenkammer 5 und/oder des Beckenüberlaufs 7 ablagern. Um eine Verschmutzung des Beckenüberlaufs 7 und zugleich eine Grobreinigung des in den Beckenüberlauf 7 strömenden Wassers bzw. des aus dem Beckenüberlauf 7 zum Auslauf 4 hin strömenden Wassers zu erzielen, werden gemäß dem Stand der Technik beispielsweise, in Fig. 1 nicht dargestellte, Rechen oder Siebvorrichtungen im oberen Bereich der Wehrschwelle 6 angebracht, die der Schmutzstoffrückhaltung dienen.

Bezugsziffer 1 in Fig. 2 bezeichnet ein Regenüberlaufbecken gemäß der vorliegenden Erfindung. Innerhalb der Beckenkammer 5 ist ein vorzugsweise langgestrecktes, starres, bewegungsfestes und zumindest teilweise wasserdurchlässiges Rückhalteelement 11 angeordnet. Das Rückhalteelement 11 besitzt Bereiche mit einer Perforation 12, die rund, eckig oder geschlitzt ausgestaltet sein kann, sodass eine Gitter-, Sieb- und/oder Netzstruktur entsteht. Vorzugsweise liegt die Perforation im Bereich von 4-10 mm x 4-10 mm. Die mit einer Perforation 12 ausgestatteten Oberflächenbereiche bewirken dadurch eine Reinigung des die Perforation 12 durchströmenden Wassers. Demnach wirkt sich die Gesamtgröße der mit einer Perforation 12 ausgestatteten Oberfläche des Rückhalteelements 11 auf dessen Reinigungsfunktion aus.

Die Fließrichtung des Wassers vom Zulauf 2 erfolgt im Vergleich zum Regenüberlaufbecken 1 aus Fig. 1 direkt vom Zulauf 2 hin zur Beckenkammer 5. Ferner strömt das Wasser bei steigendem Wasserspiegel von der Beckenkammer 5 durch das Rückhalteelement 11 hindurch in einen Stauraum 10 hinein und anschließend in den Beckenüberlauf 7. Der Stauraum 10 ist vom Beckenüberlauf 7 durch die Wehrschwelle 6 getrennt. Gemäß der vorliegenden Erfindung strömt demnach das Wasser, welches vom Zulauf 2 durch die Beckenkammer 5 hin zum Beckenüberlauf 7 strömt, durch das Rückhalteelement 11. Schmutzstoffe, die sich im Wasser befinden, werden hierbei an der Oberfläche des Rückhalteelements 11 zurückgehalten, wodurch eine wirksame Reinigung des zum Beckenüberlauf 7 strömenden Wassers erzielt wird. Zweckmäßigerweise kann auch hier bei Bedarf über eine in den Zeichnungsfiguren nicht dargestellte Pumpe später zurückbleibendes Wasser aus der Beckenkammer 5 wieder abgepumpt und dem Kanalnetz zugeführt werden.

Zweckmäßigerweise kann im Bereich der Rückhaltewand 8 bedarfsweise ein Notüberlauf 15 vorgesehen sein, welcher zur Entlastung der Beckenkammer 5 dient. Für den Fall, dass das Regenüberlaufbecken 1 ausgelastet ist oder eine Verstopfung im Bereich des Rückhalteelements 11 vorliegt, kann das Wasser von der Beckenkammer 5 hin zum Beckenüberlauf 7 über den Notüberlauf ungereinigt strömen. Der Notüberlauf 15 ist hierbei bevorzugt oberhalb der Bemessungsgrenze des Regenüberlaufbeckens 1 angeordnet.

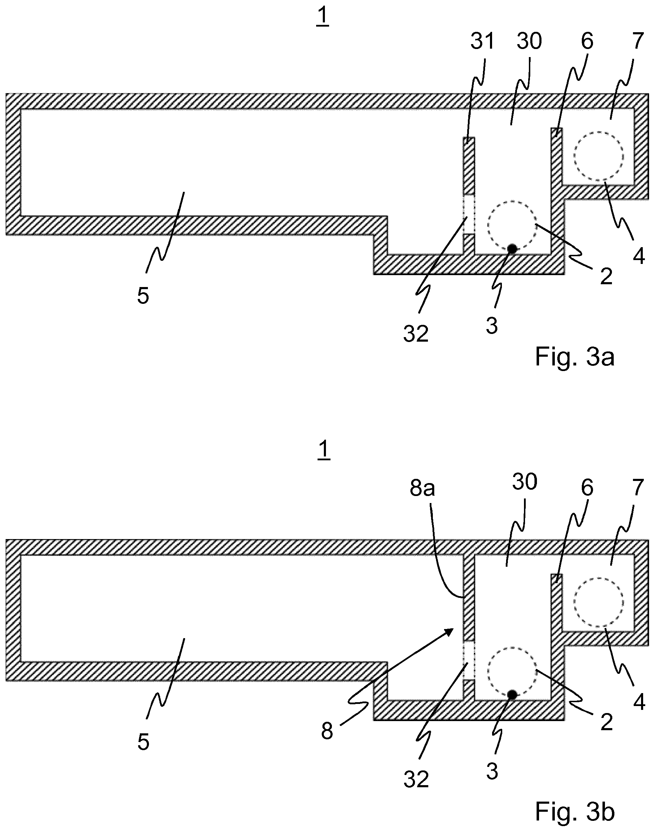

Die Fig. 3a-3f beschreiben ein Verfahren zum Umbau eines herkömmlichen Regenüberlaufbeckens 36 gemäß Fig. 1 in ein erfindungsgemäßes Regenüberlaufbecken 1. Fig. 3a zeigt einen ersten Umbauschritt des Regenüberlaufbeckens 1. Hierbei wird zunächst ein Durchlass bzw. eine durchgehende Ausnehmung 32 innerhalb der Schwelle 31, welche das Trennbauwerk 30 und die Beckenkammer 5 voneinander trennt, geschaffen. Die Ausnehmung 32 kann sich hierbei über die gesamte Länge der Schwelle 31 oder nur über einen bestimmten Bereich der Schwelle 31 erstrecken. Hierdurch entsteht eine hydraulische Kopplung des Trennbauwerks 30 und der Beckenkammer 5. Von der Schwelle 31 verbleibt lediglich ein Teilabschnitt, welcher je nach Ausgestaltung des Regenüberlaufbeckens 1 auch ganz entfernt werden kann.

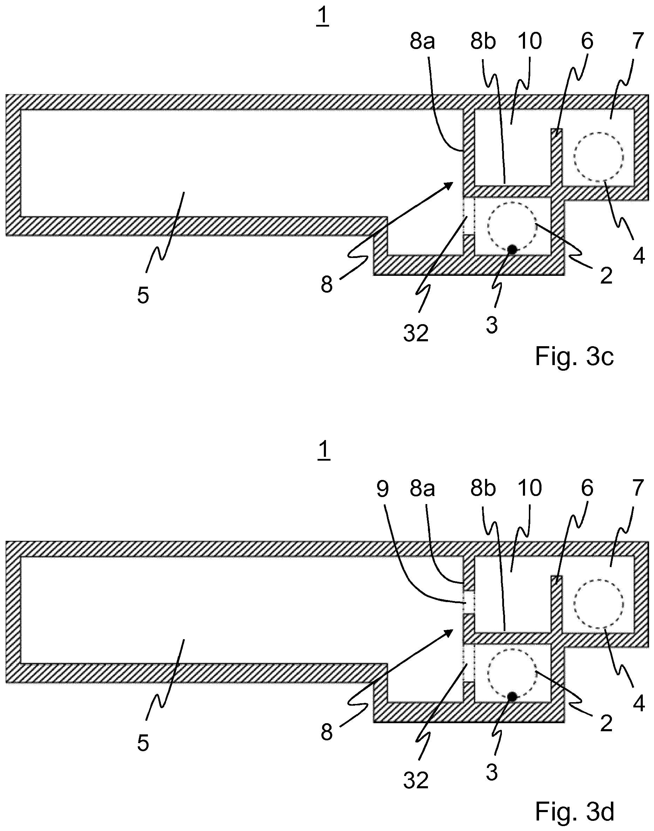

Gemäß Fig. 3b wird in einem weiteren Umbauschritt der nach oben verlaufende restliche Teilabschnitt der Schwelle 31 nach oben zur Decke des Regenüberlaufbeckens 1 hin verlängert, sodass ein erster, im Wesentlichen senkrecht verlaufender und nach oben hin geschlossener Wandabschnitt 8a einer Rückhaltewand 8 entsteht. Anschließend wird im Bereich des Trennbauwerks 30 in einem weiteren Arbeitsschritt gemäß Fig. 3c oberhalb des Zulaufs 2 ein zweiter Trennabschnitt bzw. Wandabschnitt 8b der Rückhaltewand 8 eingezogen, der vom Wandabschnitt 8a zum Beckenüberlauf 7 hin orientiert ist und z. B. im Wesentlichen horizontal verlaufen kann. Die Wandabschnitte 8a und 8b der Rückhaltewand 8 verlaufen hierbei im Winkel zueinander. Durch die gewinkelte Rückhaltewand 8 wird ein Stauraum 10 gebildet, der von der Beckenkammer 5 durch den Wandabschnitt 8a und vom Zulauf 2 durch den Wandabschnitt 8b getrennt ist. Ferner ist der Stauraum 10 vom Beckenüberlauf 7 durch die Wehrschwelle 6 getrennt.

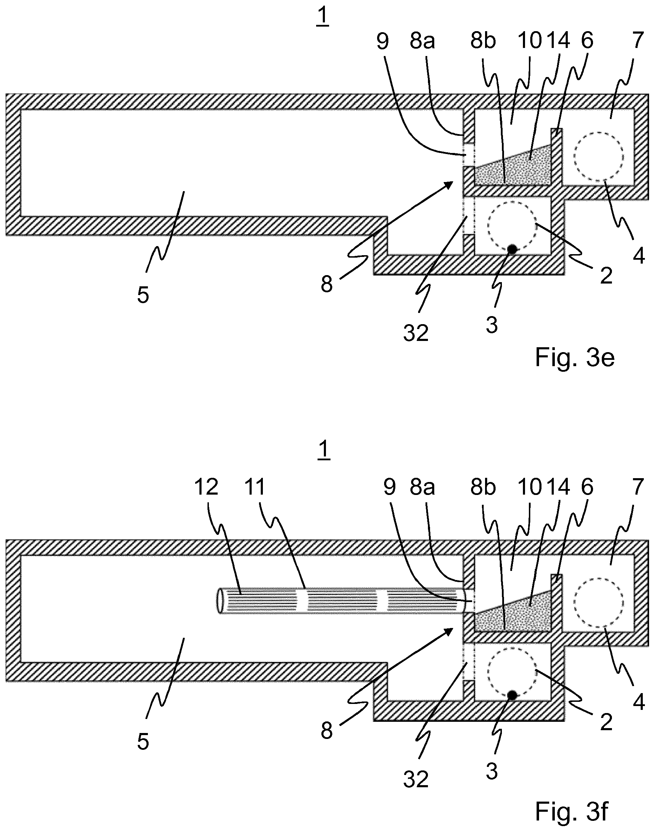

In einem weiteren Umbauschritt wird, gemäß Fig. 3d, eine Durchgangsöffnung 9 in der Rückhaltewand, d. h. vorzugsweise im Wandabschnitt 8a, eingebracht, wodurch ein direkter Durchlass für Wasser von der Beckenkammer 5 zum Stauraum 10 entsteht. Ferner kann der Stauraum 10 gemäß Fig. 3e mit einem Gefälle 14 ausgestattet werden, welches von der Wehrschwelle 6 hin zur Durchgangsöffnung 9 der Rückhaltewand 8 bzw. des Wandabschnitts 8a abfällt. Das Gefälle 14 kann beispielsweise mittels einer Einlage oder einer Gussmasse, wie z. B. Estrich oder Beton, geschaffen werden oder integraler Bestandteil des Wandabschnitts 8b sein. Das Gefälle 14 verhindert, dass Sedimentationsvorgänge im Bereich des Stauraums 10 stattfinden. Es bewirkt, dass sich aufstauendes Wasser im Bereich des Stauraums 10 wieder zurück zur Beckenkammer 5 bzw. den Rückhalteelementen 11 fließt, sobald der Wasserspiegel im Stauraum 10 bzw. in der Beckenkammer 5 sinkt. Durch den Rückfluss des Wassers werden Verschmutzungen im Bereich des Stauraums 10 entlang des Gefälles 14 zurück in die Beckenkammer 5 gespült.

Gemäß Fig. 3f wird das Rückhalteelement 11 mit einer stirnseitigen Öffnung im Bereich der Durchgangsöffnung 9 angebracht. Die der Durchgangsöffnung 9 gegenüberliegende Stirnseite des Rückhalteelements 11 ist vorzugsweise geschlossen. Das Rückhalteelement 11 kann mittels Befestigungen an der Rückhaltewand 8 angebracht werden. Ebenso kann sich das Rückhalteelement 11 zumindest teilweise innerhalb der Durchgangsöffnung 9 befinden. Zudem können, nicht dargestellte, Befestigungsvorrichtungen vorgesehen sein, die das Rückhalteelement 11 an der Decke, an den Wänden und/oder am Boden des Regenüberlaufbauwerks 1 fixieren.

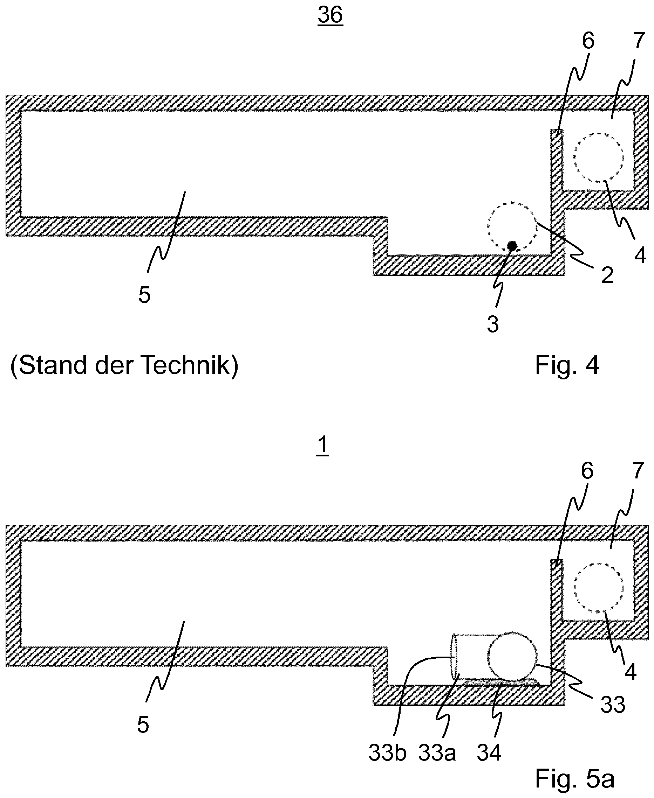

Fig. 4 zeigt eine alternative Ausgestaltung eines Regenüberlaufbeckens 36 gemäß dem Stand der Technik im Hauptschluss. Die Beckenkammer 5 wird hierbei direkt vom Zulauf 2 her mit Wasser befüllt. Für den Fall, dass die Beckenkammer 5 bis zur Ober- oder Überlaufkante der Wehrschwelle 6 mit Wasser gefüllt wird, tritt das Wasser über die Wehrschwelle 6 in den Beckenüberlauf 7, welcher anschließend über den Auslauf 4 entlastet wird.

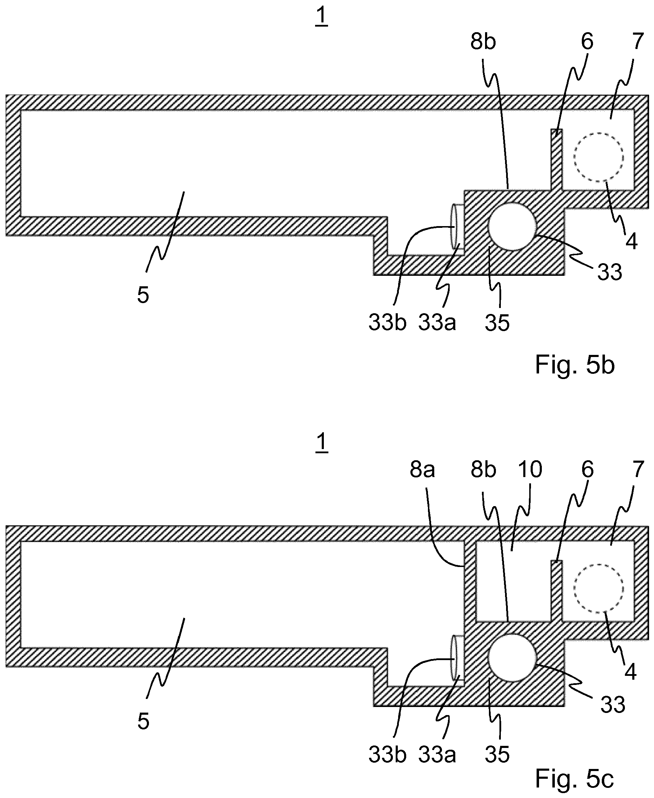

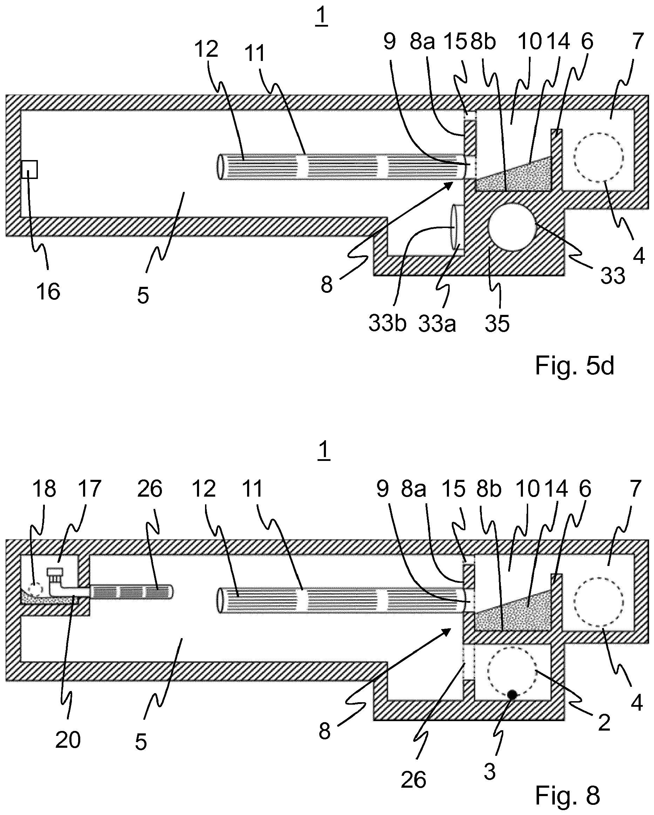

Die Fig. 5a-5d beschreiben ein Verfahren zum Umbau des Regenüberlaufbeckens 1 aus Fig. 4 in ein Regenüberlaufbecken 1 gemäß der vorliegenden Erfindung. Hierbei wird, gemäß Fig. 5a, ein Rohr 33 in die Beckenkammer 5 eingelegt, um den Zulauf 2 sowie den Ablauf 3 zu verbinden. Das Rohr 33 besteht z. B. aus GFK, PVC, PE oder dergleichen und kann beispielsweise auf einer Schüttung 34 angeordnet werden. Zudem besitzt das Rohr 33 eine Abzweigung 33a, welche als Verbindung mit der Beckenkammer 5 dient. An der Abzweigung 33a befindet sich eine zur Beckenkammer 5 hin gerichtete Rohröffnung 33b, durch die das Wasser vom Zulauf 2 durch das Rohr 33 direkt in die Beckenkammer 5 gelangt.

In einem weiteren Arbeitsschritt gemäß Fig. 5b wird das Rohr 33 mit einer Gussmasse 35, z. B. Estrich oder Beton, umgossen, sodass eine im Wesentlichen horizontal verlaufende Fläche bzw. eine Wand am oberen Bereich der Gussmasse 35 entsteht, welche den Wandabschnitt 8b bildet. In einem weiteren Arbeitsschritt wird ein vom Wandabschnitt 8b aus nach oben hin orientierter Wandabschnitt 8a erstellt, womit eine Rückhaltewand 8 entsteht und der Stauraum 10 festgelegt wird. Im Anschluss daran wird die Rückhaltewand 8 z. B. im Bereich des Wandabschnitts 8a mit einer Durchgangsöffnung 9 versehen. Der Durchgangsöffnung 9 wird anschließend ein Rückhalteelement 11 vorgeschaltet, welches z. B. am Wandabschnitt 8a angebracht wird. Das Rückhalteelement 11 entspricht dem Rückhalteelement 11 der ersten Ausführungsform der Erfindung. Zudem kann der Stauraum 10 ebenfalls mit einem Gefälle 14 versehen werden, um Verschmutzungen im Bereich des Stauraums 10 vorzubeugen. Praktischerweise kann das Gefälle 14 auch alternativ als integraler Bestandteil der Gussmasse 35 bzw. des Wandabschnitts 8b im Arbeitsschritt des Umgießens des Rohrs 33 gefertigt werden. Ferner kann ein Notüberlauf 15 im Wandabschnitt 8a installiert werden.

Alternativ oder zusätzlich kann eine Sensorik vorgesehen sein, welche eine Verschmutzung der Rückhalteelemente 11 anzeigen kann. Hierzu können z. B. Druckmessdosen und/oder Wasserstandsmesser 16 im Bereich der Beckenkammer 5, des Stauraums 10 und/oder des Beckenüberlaufs 7 angeordnet sein. Beispielsweise kann ein Wasserstandsmesser 16 im Bereich der Beckenkammer 5 sowie ein, der Übersichtlichkeit halber nicht dargestellter, Wasserstandsmesser im Bereich des Stauraums 10 jeweils den Wasserstand in der Beckenkammer 5 und im Stauraum 10 anzeigen. Ein bestimmter Wasserstandunterschied zeigt hierbei einen verminderten Wasserdurchfluss zwischen Beckenkammer 5 und Stauraum 10 über die Rückhalteelemente 11 an, wobei auf eine Verschmutzung der Rückhalteelemente 11 geschlossen werden kann. Infolgedessen kann ein Warnsignal z. B. an eine zentrale Leitstelle ausgegeben werden. In praktischer Weise kann die Übertragung des Warnsignals über Funk, eine Datenleitung oder dergleichen stattfinden.

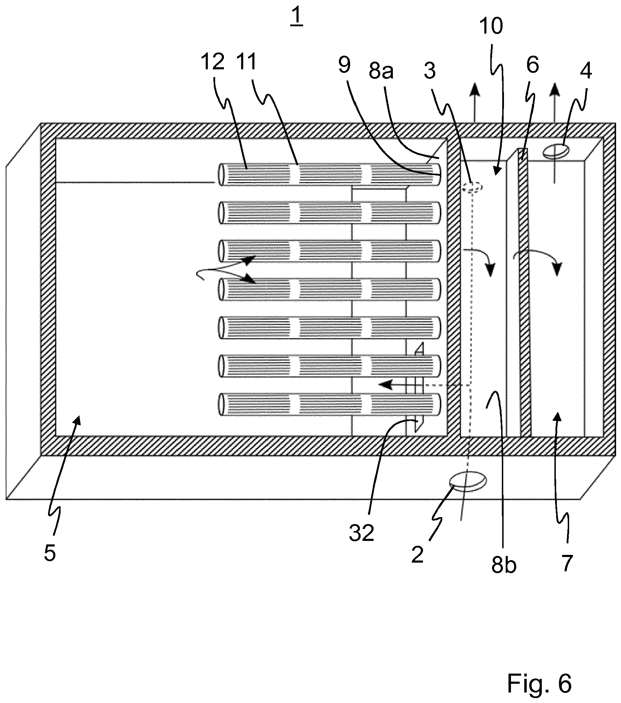

Fig. 6 zeigt eine perspektivische Draufsicht auf das erfindungsgemäße Regenüberlaufbecken 1 mit einem Batteriesystem aus mehreren Rückhalteelementen 11, die jeweils an einer Durchgangsöffnung 9 innerhalb des Wandabschnitts 8a angeordnet sind. Durch die Anordnung mehrerer Rückhalteelemente 11 kann im Vergleich zu herkömmlichen Konstruktionen die Reinigungswirkung erheblich gesteigert werden, indem eine möglichst große die Reinigungswirkung verursachende Gesamtoberfläche im Bereich der Beckenkammer 5 geschaffen wird. Dadurch kann auf zusätzliche mechanische Bauteile, wie z. B. Rechen oder Siebe entlang der Wehrschwelle 6, die eine kontinuierliche Reinigung bewirken, verzichtet werden.

Die Fließrichtung des Wassers ist in Fig. 6 mit schwarzen, teilweise gestrichelten, Pfeilen dargestellt. Die Fließrichtung des Wassers erfolgt in der Regel vom Zulauf 2 zum Ablauf 3. Im Falle eines plötzlichen Wasseranfalls wegen Starkregens fließt das Wasser vom Zulauf 2 zusätzlich durch die Durchgangsöffnungen bzw. Ausnehmung 32 in die Beckenkammer 5, wodurch die Beckenkammer 5 mit Wasser gefüllt wird. Sobald die Beckenkammer 5 bis zur Höhe der Rückhalteelemente 11 mit Wasser gefüllt ist, strömt das Wasser durch die wasserdurchlässigen, mit einer Perforation 12 versehenen Bereiche der Rückhalteelemente 11 in den Stauraum 10 hinein. Hierbei werden Schmutzstoffe an der Oberfläche der Rückhalteelemente 11 zurückgehalten, während das gereinigte Wasser durch die Durchgangsöffnungen 9 in den Stauraum 10 gelangt und sich im Stauraum 10 aufstaut. Nach dem Füllen des Stauraums 10 übertritt das Wasser die Wehrschwelle 6 und gelangt in den Beckenüberlauf 7. Vom Beckenüberlauf 7 kann das Wasser über den Auslauf 4, z. B. in einen Entlastungskanal, ein Gewässer oder dergleichen abfließen. Vorzugsweise ist der Stauraum 10 mit einem Gefälle 14 ausgestattet, welches der Übersichtlichkeit halber in Fig. 6 nicht dargestellt ist.

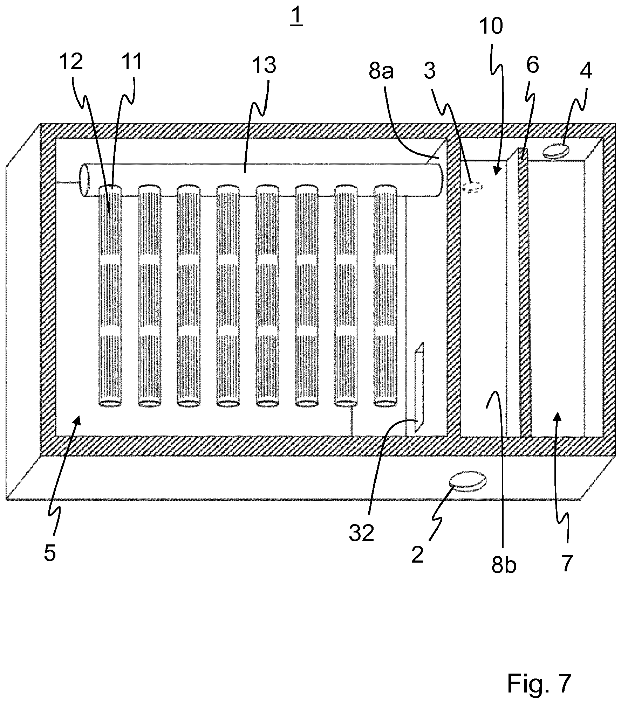

In Fig. 7 ist eine alternative Ausgestaltung des Regenüberlaufbeckens 1 dargestellt. Die Rückhalteelemente 11 sind hierbei an einem rohrförmigen Zulaufelement 13 angeordnet, welches sich vom Wandabschnitt 8a in die Beckenkammer 5 hinein erstreckt. Durch die Ausgestaltung des Regenüberlaufbeckens 1 gemäß Fig. 7 ist es möglich, je nach Geometrie der Beckenkammer 5, einen noch größeren Raum der Beckenkammer 5 für die Anordnung von Rückhalteelementen 11 zur Verfügung zu stellen.

Fig. 8 zeigt eine alternative Ausgestaltung des erfindungsgemäßen Regenüberlaufbeckens 1 mit einem Klärüberlauf 17. Der Klärüberlauf 17 befindet sich im Bereich der Beckenkammer 5. Dem Klärüberlauf 17 ist ein Rückhalteelement 26 vorgeschaltet sowie ein den Klärüberlauf 17 entlastender Auslauf 18 nachgeschaltet. Der Klärüberlauf dient dazu, für eine erste Entlastung der Beckenkammer 5 (z. B. die ersten 25% der Entlastung) zu sorgen.

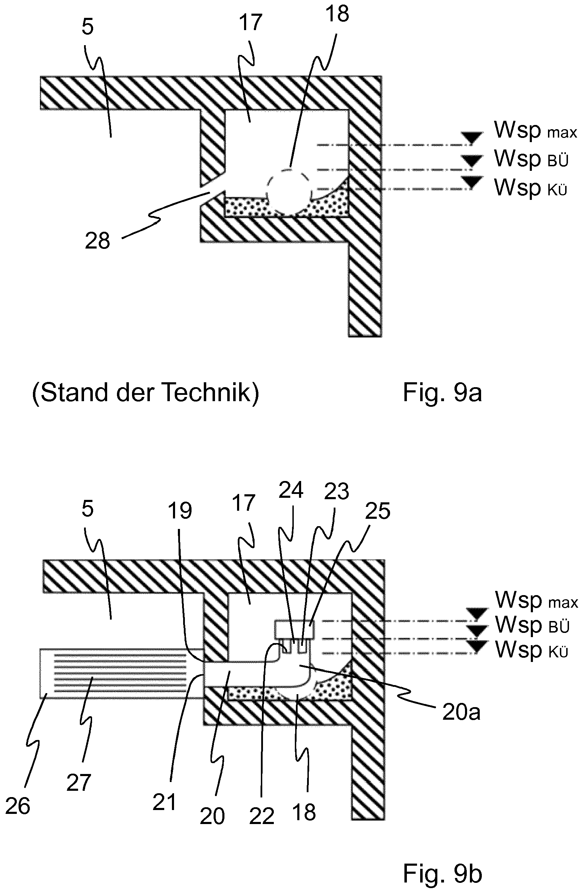

In Fig. 9a ist ein Klärüberlauf 17 an einer Beckenkammer 5 mit einem Auslauf 18 dargestellt. Der Klärüberlauf 17 ist hierbei mit der Beckenkammer 5 über einen Durchlass bzw. Schlitz 28 verbunden. Der Schlitz 28 ist zum Klärüberlauf 17 hin schräg nach oben gerichtet, wodurch die maximale Wasserspiegellage des Klärüberlaufs Wsp KÜ an der Kante des Schlitzes 28 hin zum Klärüberlauf 17 festgelegt wird. Ab der Wasserspiegellage Wsp KÜ fließt das Wasser über den Schlitz 28 in den Klärüberlauf 17. Die Entlastung der Beckenkammer 5 erfolgt ab der Wasserspiegellage Wsp KÜ über den Klärüberlauf 17 sowie dem Auslauf 18. Mit dem Erreichen der Wasserspiegellage des Beckenüberlaufs Wsp BÜ, d.h. mit dem Überströmen der Wehrschwelle 6 (vgl. z. B. Fig. 2), findet eine Entlastung der Beckenkammer 5 über den Beckenüberlauf 7 bzw. den Auslauf 4, den Klärüberlauf 17 bzw. den Auslauf 18 statt. Das Wasser des Klärüberlaufs 17 wird hierbei z. B. über Sedimentationsvorgänge im Bereich der Beckenkammer 5 gereinigt, bevor es in den Klärüberlauf 17 eintritt. Diese Reinigungswirkung ist gerade bei Starkregenereignissen mit hohem Wasseranfall nicht ausreichend.

In Fig. 9b ist eine Ausgestaltung eines erfindungsgemäßen Klärüberlaufs 17 dargestellt. Hierbei ist der Klärüberlauf 17 mit der Beckenkammer 5 über eine Zulaufvorrichtung 20 verbunden, die teilweise im Bereich einer Öffnung 19 in der Wandung des Klärüberlaufs 17 angeordnet ist. Die Zulaufvorrichtung 20 besitzt einen Eingang 21 und einen Ausgang 22. Die Strömungsrichtung des Wassers erfolgt von der Beckenkammer 5 über den Eingang 21 durch die Zulaufvorrichtung 20 hin zum Ausgang 22, welcher sich innerhalb des Klärüberlaufs 17 befindet. Dem Eingang 21 ist hierbei ein mit einer Perforation 27 ausgestattetes Rückhalteelement 26 vorgeschaltet. Dadurch wird das Wasser, welches von der Beckenkammer 5 hin zum Klärüberlauf 17 strömt, vor dem Eintritt in die Zulaufvorrichtung 20 gereinigt. Die Zulaufvorrichtung 20 ist als Rohrkrümmer mit aufgesetzten Klärschlitzen bzw. Öffnungen 23 ausgestaltet und besitzt einen abgewinkelten Abschnitt 20a, welcher sich im inneren des Klärüberlaufs 17 befindet. Der Rohrkrümmer kann hierbei beispielsweise aus GFK-, PVC-, PE-Rohr gefertigt sein. Gemäß Fig. 9b besitzt der Rohrkrümmer am oberen Ende des abgewinkelten Abschnitts 20a den Ausgang 22, welcher durch die mehreren Öffnungen 23 gebildet wird. Die Öffnungen 23 befinden sich wiederum zwischen Stegen 24 des Rohrkrümmers. Der untere Bereich der Austrittsöffnungen 23 bildet die Wasserspiegellage des Klärüberlaufs Wsp KÜ. Beim Übersteigen der Wasserspiegellage des Klärüberlaufs Wsp KÜ springt somit der Klärüberlauf 17 an. Der obere Bereich der Austrittöffnung 23 liegt auf dem Niveau der Wasserspiegellage des Beckenüberlaufs Wsp BÜ, d. h. die Wasserspiegellage ab der der Beckenüberlauf 7 anspringt. Oberhalb der Wasserspiegellage Wsp BÜ kann der Rohrkrümmer geschlossen nach oben verlaufen oder gemäß Fig. 9b eine Kappe 25 aufweisen, welche den Rohrkrümmer nach oben hin abschließt. Die Kappe 25 ist hierbei vorzugsweise im Bereich der maximalen Wasserspiegellage des Regenüberlaufbeckens Wsp max angeordnet.

### BEZUGSZEICHENLISTE

- 1: Regenüberlaufbecken
- 2: Zulauf
- 3: Ablauf
- 4: Auslauf
- 5: Beckenkammer
- 6: Wehrschwelle
- 7: Beckenüberlauf
- 8: Rückhaltewand
- 8a: Wandabschnitt
- 8b: Wandabschnitt
- 9: Durchlassöffnung
- 10: Stauraum
- 11: Rückhalteelement
- 12: Perforation
- 13: Zulaufelement
- 14: Gefälle
- 15: Notüberlauf
- 16: Wasserstandsmesser
- 17: Klärüberlauf
- 18: Auslauf
- 19: Öffnung
- 20: Zulaufvorrichtung
- 20a: abgewinkelter Abschnitt
- 21: Eingang
- 22: Ausgang
- 23: Austrittsöffnung
- 24: Steg
- 25: Kappe
- 26: Rückhalteelement
- 27: Perforation
- 28: Schlitz
- 30: Trennbauwerk
- 31: Schwelle
- 32: Ausnehmung
- 33: Rohr
- 33a: Abzweigung
- 33b: Rohröffnung
- 34: Schüttung
- 35: Gussmasse
- 36: Regenüberlaufbecken gemäß Stand der Technik

- Wsp KÜ: maximale Wasserspiegellage Klärüberlauf
- Wsp BÜ: maximale Wasserspiegellage Beckenüberlauf
- Wsp max: maximaler Wasserspiegel

## Patentansprüche

1. Regenüberlaufbecken (1) zum Sammeln und Speichern von Wasser, insbesondere Regen-, Misch- oder Schmutzwasser, mit
einem Zulauf (2),
einem Ablauf (3),
mindestens einer mit einer Decke versehenen Beckenkammer (5), mindestens einem mit einer Wehrschwelle (6) ausgestatteten Beckenüberlauf (7), der der Beckenkammer (5) nachgeschaltet ist,
mindestens einem Auslauf (4), welcher den Beckenüberlauf (7) entlastet, und
einer Reinigungsvorrichtung zur Reinigung des von der Beckenkammer (5) zum Beckenüberlauf (7) strömenden Wassers,
zwischen Beckenkammer (5) und Beckenüberlauf (7) eine Rückhaltewand (8) vorgesehen ist, die dazu dient, in der Beckenkammer (5) anfallendes Wasser aufzustauen.
wobei
zwischen der Rückhaltewand (8) und der Wehrschwelle (6) ein Stauraum (10) vorgesehen ist, in dem sich von der Beckenkammer (5) abfließendes Wasser aufstaut, um über die Wehrschwelle (6) in den Beckenüberlauf (7) zu gelangen,
in der Rückhaltewand (8) eine Durchgangsöffnung (9) vorgesehen ist, sich die Rückhaltewand (8) bis an die Decke des Regenüberlaufbeckens (1) oder bis zu einem an die Decke des Regenüberlaufbeckens (1) angrenzenden Notüberlauf (15) zwischen Beckenkammer (5) und Beckenüberlauf (7) erstreckt,
**dadurch gekennzeichnet, dass**
als Reinigungsvorrichtung ein bewegungsfestes Rückhalteelement (11) vorgesehen ist, welches sich in die Beckenkammer (5) erstreckt, derart, dass aus der Beckenkammer (5) durch die Durchgangsöffnung (9) in den Stauraum (10) abfließendes Wasser durch das Rückhalteelement (11) hindurchströmt, und
ein Gefälle (14) vorgesehen ist, welches von der Wehrschwelle (6) hin zur Durchgangsöffnung (9) der Rückhaltewand (8) derart abfällt, dass bei sinkendem Wasserspiegel im Regenüberlaufbecken (1) stets ein Rückfluss des Wassers vom Stauraum (10) durch die Durchgangsöffnung (9) hin zur Beckenkammer (5) stattfinden kann.

2. Regenüberlaufbecken (1) nach Anspruch 1, **dadurch gekennzeichnet, dass** eine Ausnehmung (32) in der Rückhaltewand (8) vorgesehen ist, sodass Wasser vom Zulauf (2) durch die Ausnehmung (32) in die Beckenkammer (5) strömen kann.

3. Regenüberlaufbecken (1) nach Anspruch 1 oder 2, **dadurch gekennzeichnet, dass** die Rückhaltewand (8) einen nach oben verlaufenden, ersten Wandabschnitt (8a) sowie einen zweiten Wandabschnitt (8b) aufweist, der zum Beckenüberlauf (7) hin orientiert ist.

4. Regenüberlaufbecken (1) nach mindestens einem der vorhergehenden Ansprüche, **dadurch gekennzeichnet, dass** sich das Rückhalteelement (11) von der Durchgangsöffnung (9) aus erstreckt.

5. Regenüberlaufbecken (1) nach mindestens einem der Ansprüche 1 bis 3, **dadurch gekennzeichnet, dass** an der Durchgangsöffnung (9) ein Zulaufelement (13) angeordnet ist, welches sich in die Beckenkammer (5) hinein erstreckt und in das mindestens ein Rückhalteelement (11) mündet.

6. Regenüberlaufbecken (1) nach mindestens einem der vorhergehenden Ansprüche, **dadurch gekennzeichnet, dass** das Rückhalteelement (11) zumindest bereichsweise eine vorzugsweise runde, eckige und/oder geschlitzte Perforation (12) aufweist.

7. Regenüberlaufbecken (1) nach mindestens einem der vorhergehenden Ansprüche, **dadurch gekennzeichnet, dass** eine Sensoreinrichtung vorgesehen ist und aus den Messdaten der Sensoreinrichtung der Verschmutzungsgrad des Rückhalteelements (11) abgeleitet werden kann.

8. Verfahren zum Umbau eines Regenüberlaufbeckens (1), wobei das Regenüberlaufbecken (1) folgendes aufweist:
einen Zulauf (2),
einen Ablauf (3),
mindestens eine Beckenkammer (5),
mindestens einen Beckenüberlauf (7), der der Beckenkammer (5) nachgeschaltet ist, und
mindestens einen Auslauf (4), welcher den Beckenüberlauf (7) entlastet,
**gekennzeichnet durch** folgende Arbeitsschritte:
- Erstellen eines Durchlasses zwischen Zulauf (2) und Beckenkammer (5) **durch** das zumindest teilweise Öffnen einer Trennvorrichtung oder durch das Einbringen einer Verbindungsvorrichtung zwischen Zulauf (2) und Beckenkammer (5),
- Festlegen einer Rückhaltewand (8), die sich bis an die Decke des Regenüberlaufbeckens (1) oder bis zu einem an die Decke des Regenüberlaufbeckens (1) angrenzenden Notüberlauf (15) zwischen Beckenkammer (5) und Beckenüberlauf (7) erstreckt und einen Stauraum (10) bildet, welcher der Beckenkammer (5) nachgeschaltet und dem Beckenüberlauf (7) vorgeschaltet ist,
- Erzeugen mindestens einer Durchgangsöffnung (9) im Bereich der Rückhaltewand (8), die als Durchlass für Wasser von der Beckenkammer (5) zum Stauraum (10) dient,
- Erstellen eines Gefälles (14) innerhalb des Stauraums (10), welches von der Wehrschwelle (6) hin zur Durchgangsöffnung (9) der Wand (8) derart abfällt, dass bei sinkendem Wasserspiegel im Regenüberlaufbecken (1) stets ein Rückfluss des Wassers vom Stauraum (10) durch die Durchgangsöffnung (9) hin zur Beckenkammer (5) stattfinden kann sowie
- Installieren mindestens eines Rückhalteelements (11), welches sich in die Beckenkammer (5) erstreckt, jeweils im Bereich einer Durchgangsöffnung (9) oder Installieren eines Zulaufelements (13), welches sich in die Beckenkammer (5) erstreckt, im Bereich der Durchgangsöffnung (9), wobei sich von dem Zulaufelement (13) mindestens ein vorzugsweise eine Mehrzahl von Rückhalteelementen (11) in die Beckenkammer (5) hinein erstreckt bzw. erstrecken.

9. Verfahren nach Anspruch 8, **dadurch gekennzeichnet, dass** das Verfahren den Arbeitsschritt Erstellen eines Notüberlaufs (15) umfasst.

10. Verfahren nach Anspruch 8oder 9, **dadurch gekennzeichnet, dass** das Verfahren den Arbeitsschritt Erstellen eines Klärüberlaufs (17) mit Zulaufvorrichtung (20) umfasst.

## Claims

1. Rain overflow tank (1) for collecting and storing water, in particular rainwater, mixed water or dirty water, having
an inflow (2),
an outflow (3),
at least one tank chamber (5) provided with a cover,
at least one tank overflow (7) which is equipped with a weir sill (6) and which is arranged downstream of the tank chamber (5),
at least one outlet (4) which relieves the tank overflow (7), and
a cleaning device for cleaning the water flowing from the tank chamber (5) to the tank overflow (7),
a retaining wall (8) is provided between the tank chamber (5) and tank overflow (7) and serves to impound water arising in the tank chamber (5), wherein
an impounding space (10) is provided between the retaining wall (8) and the weir sill (6), in which impounding space water flowing off from the tank chamber (5) is impounded in order to pass into the tank overflow (7) via the weir sill (6),
a through-opening (9) is provided in the retaining wall (8),
the retaining wall (8) extends up to the cover of the rain overflow tank (1) or up to an emergency overflow (15), which is adjacent to the cover of the rain overflow tank (1), between the tank chamber (5) and tank overflow (7),
**characterized in that**
the cleaning device provided is a movement-fixed retaining element (11) which extends into the tank chamber (5) in such a way that water flowing off out of the tank chamber (5) through the through-opening (9) into the impounding space (10) flows through the retaining element (11), and
a gradient (14) is provided which slopes down from the weir sill (6) towards the through-opening (9) of the retaining wall (8) in such a way that, with sinking water level in the rain overflow tank (1), a backflow of the water from the impounding space (10) through the through-opening (9) towards the tank chamber (5) can always take place.

2. Rain overflow tank (1) according to Claim 1, **characterized in that** a cutout (32) is provided in the retaining wall (8), with the result that water can flow from the inflow (2) through the cutout (32) into the tank chamber (5).

3. Rain overflow tank (1) according to Claim 1 or 2, **characterized in that** the retaining wall (8) has an upwardly extending, first wall portion (8a) and a second wall portion (8b) which is oriented towards the tank overflow (7).

4. Rain overflow tank (1) according to at least one of the preceding claims, **characterized in that** the retaining element (11) extends from the through-opening (9).

5. Rain overflow tank (1) according to at least one of Claims 1 to 3, **characterized in that** an inflow element (13) is arranged on the through-opening (9), which inflow element extends into the tank chamber (5) and opens into the at least one retaining element (11).

6. Rain overflow tank (1) according to at least one of the preceding claims, **characterized in that** the retaining element (11) has, at least in certain regions, a preferably round, polygonal and/or slotted perforation (12).

7. Rain overflow tank (1) according to at least one of the preceding claims, **characterized in that** a sensor device is provided and the degree of contamination of the retaining element (11) can be derived from the measurement data of the sensor device.

8. Method for converting a rain overflow tank (1), wherein the rain overflow tank (1) comprises the following:
an inflow (2),
an outflow (3),
at least one tank chamber (5),
at least one tank overflow (7) which is arranged downstream of the tank chamber (5), and
at least one outlet (4) which relieves the tank overflow (7),
**characterized by** the following work steps:
- producing a through-passage between the inflow (2) and tank chamber (5) by at least partially opening a separating device or by introducing a connecting device between the inflow (2) and tank chamber (5),
- fixing a retaining wall (8) which extends up to the cover of the rain overflow tank (1) or up to an emergency overflow (15), which is adjacent to the cover of the rain overflow tank (1), between the tank chamber (5) and tank overflow (7) and forms an impounding space (10) which is arranged downstream of the tank chamber (5) and upstream of the tank overflow (7),
- producing at least one through-opening (9) in the region of the retaining wall (8), which serves as a through-passage for water from the tank chamber (5) to the impounding space (10),
- producing a gradient (14) within the impounding space (10), which gradient slopes down from the weir sill (6) towards the through-opening (9) of the wall (8) in such a way that, with sinking water level in the rain overflow tank (1), a backflow of the water from the impounding space (10) through the through-opening (9) towards the tank chamber (5) can always take place, and
- installing at least one retaining element (11), which extends into the tank chamber (5), in each case in the region of a through-opening (9), or installing an inflow element (13), which extends into the tank chamber (5), in the region of the through-opening (9), wherein at least one, preferably a plurality of, retaining element(s) (11) extends or extend into the tank chamber (5) from the inflow element (13).

9. Method according to Claim 8, **characterized in that** the method comprises the work step of producing an emergency overflow (15).

10. Method according to Claim 8 or 9, **characterized in that** the method comprises the work step of producing a clarifying overflow (17) with inflow device (20).

## Revendications

1. Bassin à trop-plein d'eau pluviale (1) pour collecter et stocker de l'eau, en particulier de l'eau de pluie, de l'eau mélangée ou des eaux usées, comprenant
une entrée (2),
un écoulement (3),
au moins une chambre de bassin (5) pourvue d'un couvercle,
au moins un trop-plein de bassin (7) muni d'un seuil de déversoir (6) qui est monté en aval de la chambre de bassin (5),
au moins une sortie (4) qui déleste le trop-plein de bassin (7), et
un dispositif d'épuration pour l'épuration de l'eau s'écoulant depuis la chambre de bassin (5) jusqu'au trop-plein de bassin (7),
une paroi de retenue (8) étant prévue entre la chambre de bassin (5) et le trop-plein de bassin (7), laquelle sert à accumuler l'eau parvenant dans la chambre de bassin (5),
un espace d'accumulation (10) étant prévu entre la paroi de retenue (8) et le seuil de déversoir (6), dans lequel s'accumule l'eau s'écoulant depuis la chambre de bassin (5) afin de parvenir par le biais du seuil de déversoir (6) dans le trop-plein de bassin (7),
une ouverture de passage (9) étant prévue dans la paroi de retenue (8),
la paroi de retenue (8) s'étendant entre la chambre de bassin (5) et le trop-plein de bassin (7) jusqu'au couvercle du bassin à trop-plein d'eau pluviale (1) ou jusqu'à un trop-plein de secours (15) adjacent au couvercle du bassin à trop-plein d'eau pluviale (1),
**caractérisé en ce**
**qu'**il est prévu un élément de retenue (11) solidaire en mouvement en tant que dispositif d'épuration, lequel s'étend dans la chambre de bassin (5) de telle sorte que l'eau s'écoulant à partir de la chambre de bassin (5) à travers l'ouverture de passage (9) dans l'espace d'accumulation (10) s'écoule à travers l'élément de retenue (11), et
il est prévu une pente (14) qui descend depuis le seuil de déversoir (6) vers l'ouverture de passage (9) de la paroi de retenue (8) de telle sorte que lorsque le niveau d'eau dans le bassin à trop-plein d'eau pluviale (1) diminue, il puisse toujours se produire un reflux de l'eau depuis l'espace d'accumulation (10) à travers l'ouverture de passage (9) vers la chambre de bassin (5).

2. Bassin à trop-plein d'eau pluviale (1) selon la revendication 1, **caractérisé en ce qu'**un évidement (32) est prévu dans la paroi de retenue (8), de telle sorte que de l'eau puisse s'écouler depuis l'entrée (2) à travers l'évidement (32) dans la chambre de bassin (5).

3. Bassin à trop-plein d'eau pluviale (1) selon la revendication 1 ou 2, **caractérisé en ce que** la paroi de retenue (8) présente une première portion de paroi (8a) s'étendant vers le haut et une deuxième portion de paroi (8b) qui est orientée vers le trop-plein de bassin (7).

4. Bassin à trop-plein d'eau pluviale (1) selon au moins l'une quelconque des revendications précédentes, **caractérisé en ce que** l'élément de retenue (11) s'étend hors de l'ouverture de passage (9).

5. Bassin à trop-plein d'eau pluviale (1) selon au moins l'une quelconque des revendications 1 à 3, **caractérisé en ce qu'**un élément d'entrée (13) est disposé au niveau de l'ouverture de passage (9), lequel s'étend à l'intérieur de la chambre de bassin (5) et débouche dans l'au moins un élément de retenue (11).

6. Bassin à trop-plein d'eau pluviale (1) selon au moins l'une quelconque des revendications précédentes, **caractérisé en ce que** l'élément de retenue (11) présente au moins en partie une perforation (12) de préférence ronde, polygonale et/ou fendue.

7. Bassin à trop-plein d'eau pluviale (1) selon au moins l'une quelconque des revendications précédentes, **caractérisé en ce qu'**il est prévu un dispositif de capteur et, à partir des données de mesures du dispositif de capteur, le degré d'encrassement de l'élément de retenue (11) peut être déduit.

8. Procédé de construction d'un bassin à trop-plein d'eau pluviale (1), le bassin à trop-plein d'eau pluviale (1) présentant :
une entrée (2),
un écoulement (3),
au moins une chambre de bassin (5),
au moins un trop-plein de bassin (7) qui est monté en aval de la chambre de bassin (5), et
au moins une sortie (4) qui déleste le trop-plein de bassin (7),
**caractérisé par** les étapes de travail suivantes :
- création d'un passage entre l'entrée (2) et la chambre de bassin (5) par ouverture au moins partielle d'un dispositif de séparation ou par introduction d'un dispositif de connexion entre l'entrée (2) et la chambre de bassin (5),
- fixation d'une paroi de retenue (8) qui s'étend entre la chambre de bassin (5) et le trop-plein de bassin (7) jusqu'au couvercle du bassin à trop-plein d'eau pluviale (1) ou jusqu'à un trop-plein de secours (15) adjacent au couvercle du bassin à trop-plein d'eau pluviale (1) et forme un espace d'accumulation (10) qui est monté en aval de la chambre de bassin (5) et qui est monté en amont du trop-plein de bassin (7),
- réalisation d'au moins une ouverture de passage (9) dans la région de la paroi de retenue (8), qui sert de passage pour l'eau allant de la chambre de bassin (5) à l'espace d'accumulation (10),
- création d'une pente (14) à l'intérieur de l'espace d'accumulation (10), qui descend depuis le seuil de déversoir (6) vers l'ouverture de passage (9) de la paroi (8) de telle sorte que lorsque le niveau d'eau dans le bassin à trop-plein d'eau pluviale (1) diminue, il puisse toujours se produire un reflux de l'eau depuis l'espace d'accumulation (10) à travers l'ouverture de passage (9) vers la chambre de bassin (5), et
- installation d'au moins un élément de retenue (11) qui s'étend dans la chambre de bassin (5), à chaque fois dans la région d'une ouverture de passage (9) ou installation d'un élément d'entrée (13) qui s'étend dans la chambre de bassin (5), dans la région de l'ouverture de passage (9), au moins un, et de préférence plusieurs, éléments de retenue (11) s'étendant depuis l'élément d'entrée (13) dans la chambre de bassin (5).

9. Procédé selon la revendication 8, **caractérisé en ce que** le procédé comprend l'étape de travail de création d'un trop-plein de secours (15).

10. Procédé selon la revendication 8 ou 9, **caractérisé en ce que** le procédé comprend l'étape de travail de création d'un trop-plein de clarification (17) avec un dispositif d'entrée (20).
